# EUROPEAN PATENT SPECIFICATION

(11) **EP 2 015 592 B1**
(45) Date of publication and mention of the grant of the patent: **11.07.2012**
(21) Application number: 07720936.9
(22) Date of filing: 24.04.2007
(51) Int. Cl.: H04L 29/06

(54) **REALIZING A MULTIMEDIA CALL SERVICE**
REALISIERUNG EINES MULTIMEDIA-ANRUFDIENSTES
MISE EN PLACE D'UN SERVICE D'APPEL MULTIMÉDIA

(30) Priority: 29.04.2006 CN 200610079110
(43) Date of publication of application: 14.01.2009
(73) Proprietor: Huawei Technologies Co., Ltd., Longgang District, Shenzhen Guangdong 518129 (CN)
(72) Inventor: WANG, Geng, Shenzhen, Guangdong 518129 (CN)
(74) Representative: Hengelhaupt, Jürgen
(86) International application number: PCT/CN2007/001363
(87) International publication number: WO 2007/124684

(56) References cited:
- EP-A- 1 633 113
- WO-A-2006/020031
- WO-A-2007/045526
- WO-A1-2005/032164
- CN-A- 1 633 202
- CN-A- 1 678 113
- US-A1- 2004 028 037
- US-A1- 2004 076 145
- US-A1- 2005 221 826
- US-A1- 2005 250 505
- "Universal Mobile Telecommunications System (UMTS); Out of band transcoder control; Stage 2 (3GPP TS 23.153 version 6.3.0 Release 6); ETSI TS 123 153" ETSI STANDARDS, LIS, SOPHIA ANTIPOLIS CEDEX, FRANCE, vol. 3-CN4, no. V6.3.0, 1 September 2005 (2005-09-01), XP014032454 ISSN: 0000-0001
- JUERGEN CARSTENS: "MSC Server/MSC with Integrated MGCF (MSCF)", IP.COM JOURNAL, IP.COM INC., WEST HENRIETTA, NY, US, 25 June 2004 (2004-06-25), XP013020214, ISSN: 1533-0001

## Description

### FIELD OF THE INVENTION

The invention relates generally to the field of wireless communication, and more particularly, to a method, system and apparatus for realizing multimedia call service.

### BACKGROUND

CS Domain multimedia call service is an important service in the Third Generation Mobile Communication System, and it is a landmark service which distinguishes the Third Generation mobile communication from the second generation mobile communication. The CS Domain multimedia call service makes it possible for the user to see the image of the opposite party during the process of voice call, and is an important service of actual application value.

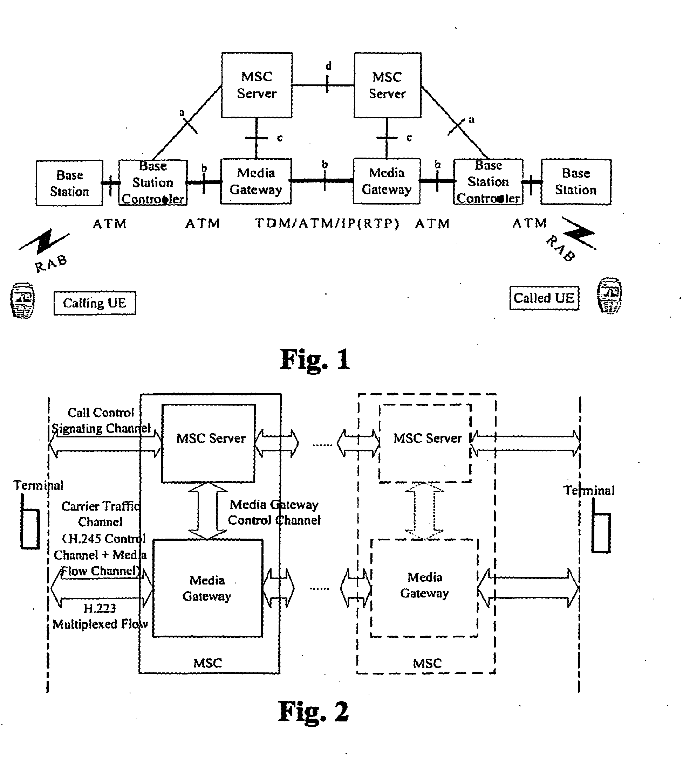

A system framework is defined for the Third Generation WCDMA mobile communication to provide various services, which include multimedia call services. The basic network elements included in the system framework are: user equipment (UE), a WCDMA system base station NODE B, a WCDMA system base station controller Radio Network Controller (RNC), an Media Gateway (MGW) and an Mobile Switching Center server (MSC server). A basic networking configuration of the system framework is shown in Figure 1.

UE: terminal equipment used by a user, often called a handset;

NODE B: mainly responsible for the transmission and reception of wireless signals;

RNC: mainly responsible for the management of wireless access network;

MGW: mainly responsible for the management of various carrier resources, and performing actual operations for the access network;

MSC server: the core of the system, mainly responsible for the logical control of various services, uniformly scheduling various network resources, and generating calling records;

a interface: a signaling channel for the air interface;

b interface: a traffic data channel;

c interface: a signaling channel for Media Gateway control;

d interface: a signaling channel for BICC/ISUP/SIP.

Based on the system framework above mentioned, the WCDMA Third Generation Mobile Communication System provides a multimedia call service called Multimedia call (see 3GPP TS 24.008), Figure 2 illustrates a diagram of its implementing framework. This kind of service implements not only the functions of voice calls and data communications, but also the function of multimedia calls.

In order to realize the multimedia call service, the following signaling and protocols are necessary:

1. Call control signaling, which is divided into two categories, one category is the air interface signaling for implementing call control between the terminal and the network side equipment, another category is the call control signaling between network equipment (i.e., relay signaling). They are all used to transfer messages for the initiation, ringing, answering and clearing of calls, and to negotiate to establish a Traffic Channel.

2. H.245 multimedia communication control protocol. The H.245 protocol formulated by the ITU-T defines how a plurality of Media Flow Logical Channels is established in a single traffic data channel by a series of negotiations. It defines further the process of the negotiation about terminal abilities (after the process, the two parties of the communication get to know the media types the other party supports, such as voice and video,), master-slave determination (to determine the master-slave relationship), interaction of multiplexed control information (for the support of simultaneously transferring a plurality of media flows in a single traffic channel) and opening and closing of Media Flow Logical Channels.

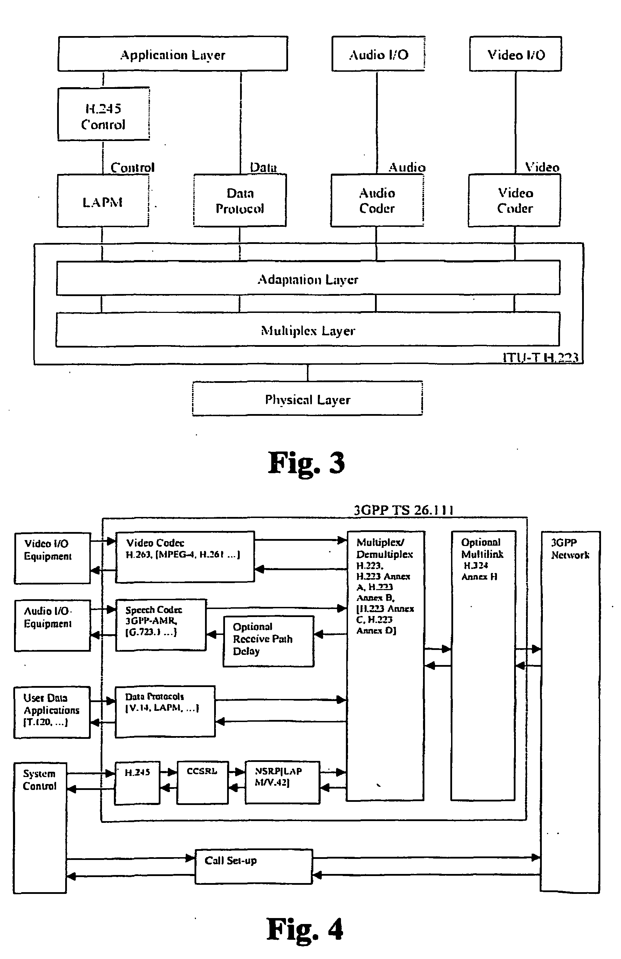

3. H.223 protocol for low bit rate multimedia multiplexed communication. The H.223 protocol formulated by the ITU-T makes it possible for the two parties in communication to use a single traffic data channel to transfer simultaneously a plurality of voice, video and data media flows. The protocol needs the incorporation of H.245. Referring to Figure 3, which is a diagram of the H.223 structural hierarchy, the application layer (i.e., the service object of H.223) is a module for providing and receiving various voice, video or data (e.g., the microphone, display screen or the camera of a handset). The lowest layer is the physical layer which is a traffic data channel. It is seen from Figure 3 that H.223 protocol supports the transferring of a plurality of kinds of media flows by using a single physical traffic channel.

4. The 3G-324M terminal is a terminal defined by 3GPP that may be used for multimedia call service. Refer to Figure 4, it mainly includes three parts. The first part is the media processing module, which includes voice, video and data processing sections. The second part is the system control module, which is responsible for interacting with the network side in order to perform call control, and meanwhile, performing the operation for establishing and releasing of logical channels for the opposite equipment by H.245 protocol. The third part is the H.223 protocol processing module, which is responsible for the multiplexing and de-multiplexing of voice, video, data and H.245 control information.

As shown in Figure 2, the multimedia call service mentioned in the 3GPP TS 24.008 is characterized in the following.

In the service, the function of the network is limited to the complete of call connection and the establishment of a Traffic Channel for the two parties of the communication, the network does not participate in the establishment of the Media Flow Logical Channel. The establishment operation of the Media Flow Logical Channel is fulfilled in a manner of in-band terminal to terminal by the two parties of the communication after the call connection is established. Thus, the process of establishing the video call is composed of two phases. In the first phase, the call connection processing such as the initiation, ringing and answering of the call is fulfilled. After the called party answers, a Traffic Channel is established for the two parties of the call by the network. In the second phase, the two parties of the call establish various Media Flow Logical Channels in the Traffic Channel by in-band negotiation within the established Traffic Channel according to the manner defined in H.245 through their own terminals, in order to transfer each voice, video and data media flow. Each media flow is transferred in the Traffic Channel according to the multiplexing method defined by H.223.

However, because the process of the establishing Media Flow Logical Channels in the above mentioned scheme is completed by the two parties of the communication in a manner of "in-band terminal to terminal" within the Traffic Channel, the MSC server at the network side has no knowledge about the establishment of the Media Flow Logical Channels in the Traffic Channel, which makes it difficult to add additional functions for the multimedia call, for example: the function of media insertion during the process of establishing the call (the network side plays voice or video prompts for the caller user when a wrong number is dialed, the call is forwarded, or a Coloring Ring Back Tone is played for the caller user), media insertion during the call (the network side plays stand by tone or video for the party being held when a HOLD occurs; or a smart playing during the call, which includes balance prompts, value charging prompts, etc.), and some complementary services of the kind of call completion.

The services mentioned above have already been widely used in the 2G networks. As a more advanced network, the 3G network also supports similar functions. Because of the limitation of the framework in the existing CS Domain of WCDMA and the realization scheme of the multimedia call services, some functions related to the media flow processing and requiring the participating of the network side equipment can not be realized in the current 3G network.
US 2005/0250505 A1 discloses an implementation of multiple simultaneous calls for a mobile station in a mobile communication system, wherein a common traffic channel is allocated to several simultaneous calls of the mobile station, so that the calls share capacity of the common channel. The common traffic channel is allocated when the first call or calls are set up, and the capacity of the traffic channel is adjusted dynamically during the calls. The common traffic channel capacity is increased or the allocated capacity is reallocated when a new call is added to the traffic channel.
US 2004/0076145 A1 discloses a method and system for establishing a connection to a terminal device, wherein a user capability information defining supported types of information streams is set in a compatibility information element within an outband signalling message, and a capability negotiation is performed by transmitting said outband signalling message via an outband control channel. The code or user capability information may be set at the terminal device or at an intermediate network element based on a subscriber profile information obtained from a subscriber database. Thereby, the user capability, such as a multimedia session composition, can be already negotiated or handled during the outband call setup phase, and a corresponding inband negotiation can be avoided.
JUERGEN CARSTENS: "MSC Server/MSC with Integrated MGCF (MSCF)" discloses a standard architecture of the Internet Multimedia Subsystem (IMS) and the CS (Circuit Switched) domain, as defined in the 3GPP standardization, wherein the Media Gateway Control Function (MGCF) in the IMS and the MSC (Mobile Switching Center) Server in the CS domain perform similar tasks; and the MGCF functionality can easily be integrated in the MSC Server.

### SUMMARY

Embodiments of the invention provide a method, system and apparatus for realizing multimedia call services, to make it possible for the network to provide additional functions related to the media flow processing for users based on the current WCDMA CS Domain framework and the multimedia call service implementation schemes.

The method of the embodiments of the invention includes: A. a Mobile Switching Center Server (MSC server) establishes a Media Control Signaling Channel with each party participating in a multimedia call service through a Traffic Channel established during call connection; B. the MSC server participates in media negotiation through the Media Control Signaling Channel and completes the establishment of Media Flow Logical Channels in order to implement the multimedia call service, wherein step A further includes: the MSC server establishes a first part of the Media Control Signaling Channel with a Media Gateway (MGW) through a Media Gateway Control Interface; the MSC server instructs the MGW through the Media Gateway Control Interface to establish a second part of the Media Control Signaling Channel in the Traffic Channel between the MGW and each party respectively; and the MSC server connects the first part and the second part of the Media Control Signaling Channel to establish the Media Control Signaling Channel between the MSC server and each party.

The system for implementing multimedia call service includes: all parties participating in a multimedia call service, and an MGW with ability to process multiplexed flows; an MSC server, configured to establish a part of a Media Control Signaling Channel with a MGW through a Media Gateway Control Interface, instruct the MGW through the Media Gateway Control Interface to establish a second part of the Media Control Signaling Channel in a Traffic Channel established during a call connection between the MGW and each party participating in the multimedia call service respectively, connect the first part and the second part of the Media Control Signaling Channel to establish the Media Control Signaling Channel between the MSC server and each party, participate in a media negotiation through the Media Control Signaling Channel and complete the establishment of Media Flow Logical Channels in order to implement the multimedia call service.

After the call connection is completed and a Traffic Channel is established in the embodiments of the invention, rather than completing the media negotiation in a manner of in-band terminal to terminal in the Traffic Channel by all parties of the communication, the MSC server participates in the media negotiation, so that the MSC server learns of the establishment of Media Flow Logical Channels in the procedure of media negotiations among parties, and the MSC server may control the establishment of the Media Flow Logical Channels, in order to implement the multimedia call service.

### BRIEF DESCRIPTION OF THE DRAWINGS

Figure 1 is a diagram illustrating a framework of an existing WCDMA communication system;

Figure 2 is a diagram illustrating an implementation framework of multimedia call services provided by an existing WCDMA communication system;

Figure 3 is a diagram illustrating a hierarchy of an existing H.233;

Figure 4 is a diagram illustrating an inner structure of an existing 3G-324M terminal;

Figure 5 is a diagram illustrating the structure of the server in a Mobile Switching Center in an embodiment of the invention;

Figure 6 is a diagram illustrating the system structure of implementing a multimedia call service in an embodiment of the invention;

Figure 7 is a flowchart illustrating the steps of a method in an embodiment of the invention;

Figure 8 is a service logic diagram illustrating the server in the Mobile Switching Center which participating in a media negotiation as one party in an embodiment of the invention;

Figure 9 is a service logic diagram illustrating the server in the Mobile Switching Center which implements the function of a media negotiation agent in an embodiment of the invention;

Figure 10 is a service logic diagram illustrating the server in the Mobile Switching Center acting as a transparently-transferring network element in an embodiment of the invention;

Figure 11 is a flowchart illustrating the signaling in the first embodiment of the method of the invention; and

Figure 12 is a flowchart illustrating the signaling in the second embodiment of the method of the invention.

### DETAILED DESCRIPTION

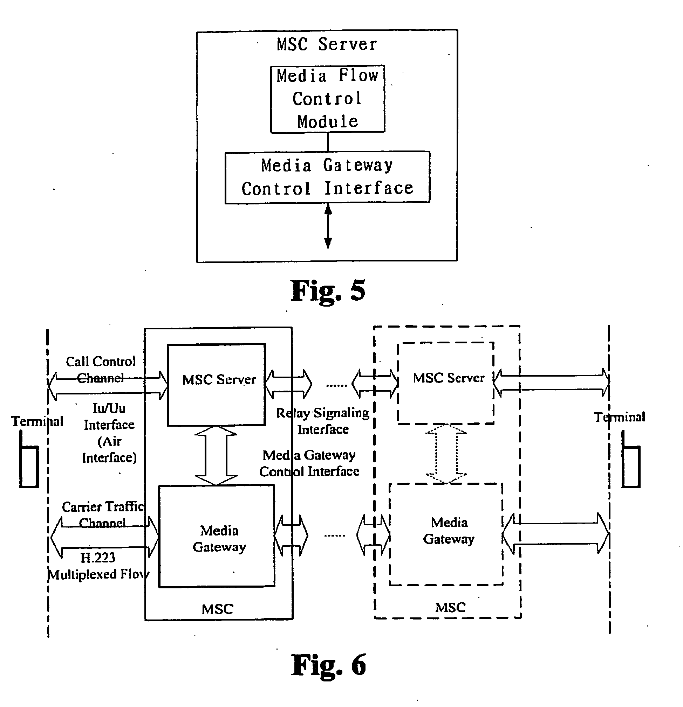

In order that MSC server may participate in media negotiation, so that 3G networks may provide additional functions related to media flow processing to users, for example, to make 3G networks to be able to provide the function of media insertion as that in 2G networks (functions such as playing failure tone or call forwarding tone), embodiments of the invention provide an MSC server in the layer of network elements. As illustrated in Figure 5, the MSC server includes a media flow control module, configured to participate in media negotiation and to control media flow transmission; and a Media Gateway Control Interface, configured to exchange H.245 messages and multiplex flow control information with MGW.

Applying the above mentioned MSC server, the embodiments of the invention provide a system for implementing multimedia call service on a system level, as illustrated in Figure 6. The system includes MSC servers and MGWs, which are connected through a Media Gateway Control Interface; MSC SERVERs and terminals which are connected through Iu/Uu interfaces (air interfaces); MSC SERVERs of all offices which are connected through relay signaling interfaces; and all parties participating in multimedia call services which are connected through Carrier Traffic Channels.

The MGWs have the ability to process multiplexed flows, besides the ability to process voice and data traffic. The ability to process multiplexed flows includes, but not limited to, supporting the combination of a plurality of separate media flows into one Traffic Channel to transmit them, supporting separation of a multiplexed flow into separate media flows, and supporting through connection of media flow.

The MSC servers participate in media negotiation and media flow transmission control besides the function of call connection control. The MSC servers exchange H.245 messages and control information of multiplexed flows with the MGWs through the Media Gateway Control Interfaces besides exchanging voice and data traffic carrier control signaling messages through the Media Gateway Control Interfaces with the MGWs, and controls thereby the MGWs, in order to participate in the codec negotiation, opening and closing operations of media flows.

If the MSC servers and the MGWs are combined in the system, the Media Gateway Control Interfaces are internal interfaces. If the MSC servers are separate from the MGWs, the Media Gateway Control Interfaces are Mc interfaces. In the two cases of combination and separation, there is no limitation with respect to the relationship of one-to-one correspondence between the MSC servers and the MGWs.

The Iu/Uu interfaces (air interfaces) and the relay signaling interfaces are the same as that in the prior art.

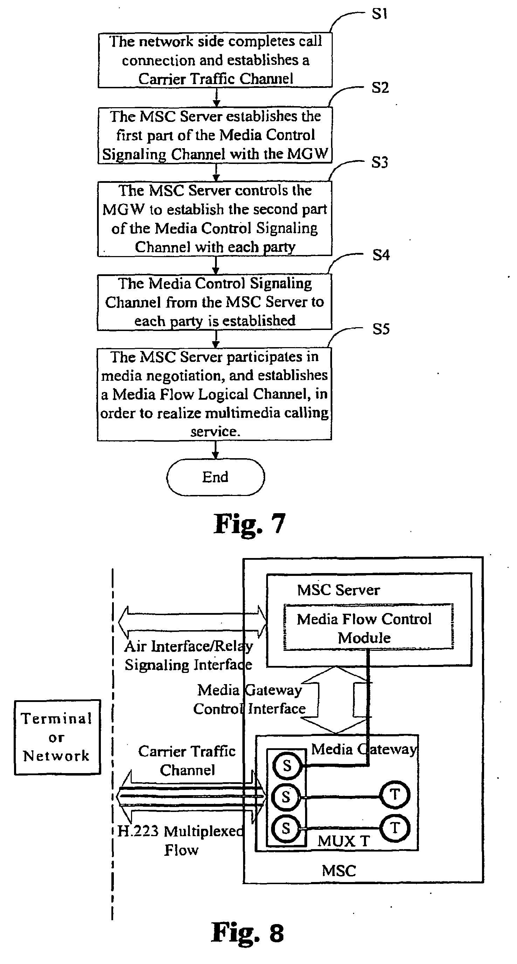

Using the above mentioned MSC server and system, embodiments of the invention provide a method for realizing multimedia call service, as illustrated in Figure 7. The method includes the following steps.

S1: The network completes call connection and establishes a Traffic Channel, after a multimedia call service is initiated.

Call connection means the process of initiation, ringing, answering and clearing of a call, and the establishment of a Traffic Channel. The process of multimedia call connection processing of the embodiments of the invention is the same as the process of the connection processing of calls of the type of data traffic (such as voice calls) in the prior art.

S2: The MSC server establishes the first part of the Media Control Signaling Channel with the MGW.

Before media negotiation among the parties, the MSC server establishes the first part of the Media Control Signaling Channel with the MGW through the Media Gateway Control Interface. Signaling formulated by ITU-T H.245 (not limited to ITU-T H.245) may be used in the first part of the Media Control Signaling Channel.

S3: The MSC server controls the MGW to establish the second part of the Media Control Signaling Channel with each party.

The MSC server instructs the MGW to establish the second part of the Media Control Signaling Channels with each party in the Traffic Channel respectively (there may be other offices between them). Signaling formulated by ITU-T H.245 (not limited to ITU-T H.245) may be used in the second part of the Media Control Signaling Channel.

S4: The Media Control Signaling Channel from the MSC server to each party is established.

The first part and the second part of the Media Control Signaling Channel are connected, to establish a two-way Media Control Signaling Channel from the MSC server to each party.

S5: The MSC server participates in media negotiation, and establishes a Media Flow Logical Channel, in order to realize multimedia call service.

After the Media Control Signaling Channels from the MSC server to all parties are established, the MSC server may initiate a process of H.245 media negotiation to each party, in order to participate in media negotiation. Otherwise, in the process of H.245 media negotiation initiated by one party, the MSC server participates in the media negotiation.

Depending on the service logic of the MSC server, the MSC server may choose one of the following three ways (including but not limited to the following three ways) for media negotiation.

a. As illustrated in Figure 8, the MSC server may negotiate with the opposite party as one party of the media negotiation (such as playing call failure tone scenery). The MSC server performs media negotiation with the opposite party through the Media Control Signaling Channel established in step S4. The MSC server controls the MGW to establish Media Flow Logical Channels with the opposite party in Traffic Channels (including but not limited to two Media Flow Logical Channels). After that, the MSC server may control the MGW to transmit and/or receive media flows in the Media Flow Logical Channels.

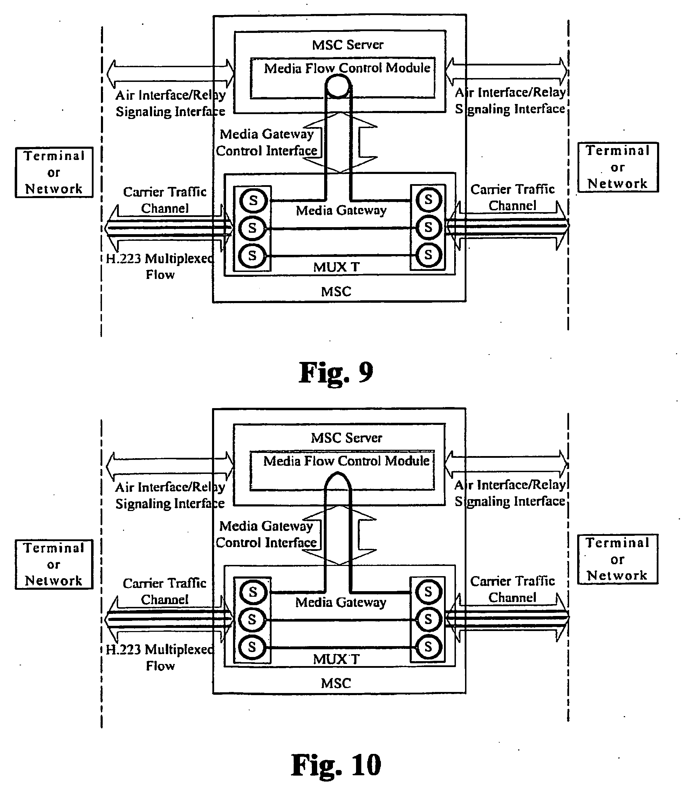

b. As illustrated in Figure 9, the MSC server implements the function of an agent (such as multimedia Coloring Ring scenery, ECT scenery). The MSC server performs media negotiation with all parties respectively through the Media Control Signaling Channel established in step S4. The MSC server controls the MGW to establish Media Flow Logical Channels with all parties respectively in Traffic Channels. After that, all parts of the Media Flow Logical Channels established are connected, in order to realize media flow interactions among all parties.

c. As illustrated in Figure 10, as a special situation that the MSC server implements the function of an agent, in a general scenery of a call with insertion of additional functions being unnecessary, in order to increase efficiency and to save network resources, the MSC server does not interfere with the processes of media flow negotiation of any party. In stead, the MSC server acts only as a transparently-transmission network element of each party of the media negotiation. Each party performs media negotiations through the MSC server transparently-transmission media negotiation information, and establishes Media Flow Logical Channels in the Traffic Channel, in order to transparently-transmit flow media through the MGW. At the same time of performing media negotiation by each party, the MSC server records transparently-transmitted media negotiation information. When additional functions are necessary to be inserted, the MSC server may control flow media transmitted in Media Flow Logical Channels, according to the recorded media negotiation information and in corporation with the processing manner of the above mentioned a or b.

A description will be given below by means of two embodiments.

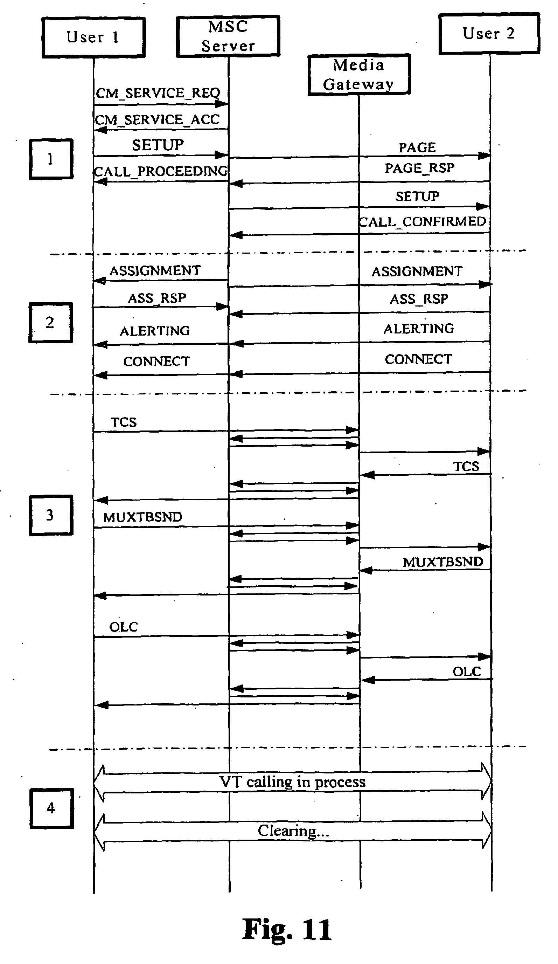

Method example 1: The MSC server implements multimedia call service without interfering with the establishment of Media Flow Logical Channels. For the convenience of description, it is assumed that user 1 initiates a multimedia call to user 2 in the local office. As illustrated in Figure 11 (Notes: the process of obtaining a roaming number and the process of master-slave determination of H.245 are the same as those in the prior art, and the description about them are omitted for simplification), the example includes the following specific steps.

1. User 1 initiates a multimedia call to user 2, the call reaches user 2 via the MSC server.

2. The user equipment of user 2 rings and user 2 answers, the network establishes a two-way Traffic Channel for the users.

3. The present step includes the process of establishing Media Flow Logical Channels by user 1 with user 2. The path which an H.245 message passes is: user 1/user 2, MGW, MSC server, MGW, user 2/user 1.

The Terminal Capability Sending (TCS) message, Multiplexed Table Sending (MUXTBSND) message and Open Logical Channel (OLC) message in Figure 11 are H.245 messages. But the sequence of sending the messages such as the TCS, MUXTBSND, OLC is not limited to that illustrated in Figure 11.

Response messages are omitted in Figure 11. The response messages for the TCS, MUXTBSND and OLC messages etc. are necessary according to H.245. After the user at the receiving side receives the above mentioned messages, returning a response message in a direction opposite to the original message path will be enough.

4. Users enter state of multimedia call. After the call finishes in the end, a call release processing is performed.

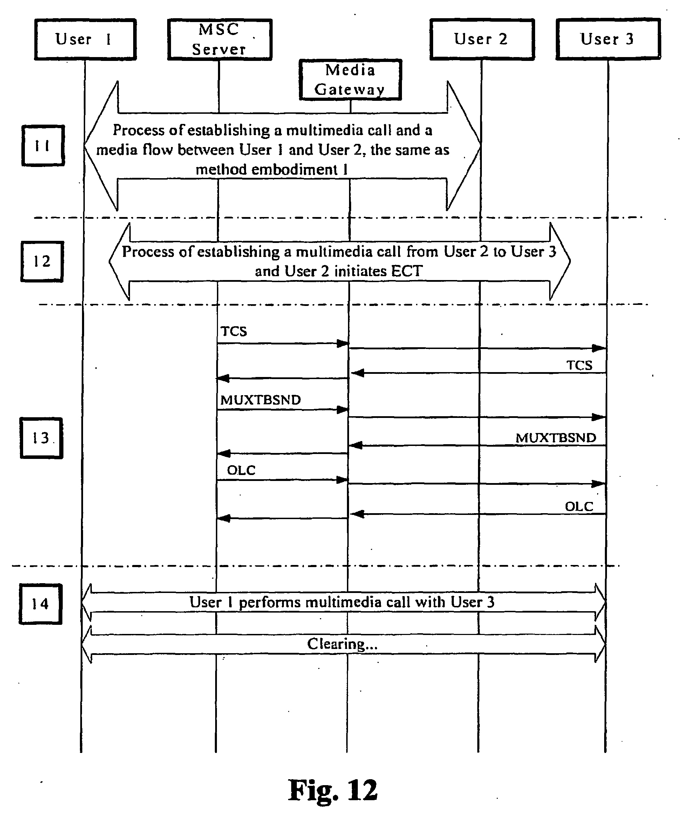

Method example 2: The MSC server implements the function of an agent, and realizes multimedia call services. For convenience of description, it is assumed that user 1 initiates successfully a multimedia call to user 2 in the local office. In the process of the call, user 3 initiates to user 2 a multimedia call. When the call is in a status of ringing, user 2 performs an ECT operation, connects user 1 and user 3, and exits the call itself. User 1 and user 3 perform a multimedia call. As illustrated in Figure 12 (Notes: the process of obtaining a roaming number and the process of master-slave determination of H.245 are the same with that in the prior art, and the description about them are omitted for simplification), the example includes the following specific steps.

11. The process of establishing a multimedia call and media flows between user I and user 2, which is the same as that of method example 1. Media Flow Logical Channels are established between user 1 and the MGW, and between the MGW and user 2 in the process.

12. User 3 initiates to establish a multimedia call to user 2. When the call is in a status of ringing, an ECT (see 3G TS 23.091) is initiated by user 2, and a multimedia call is established between user 1 and user 3. User 2 exits the call. The MSC server closes the Media Flow Logical Channels between the MGW and user 2.

13. The MSC server acts for user 1 to establish a Media Flow Logical Channel from the MGW to user 3. In corporation with the existing Media Flow Logical Channels between user 1 and the MGW, continuous Media Flow Logical Channels may be provided between user 1 and user 3.

The TCS message, MUXTBSND message, and OLC message in Figure 12 are H.245 messages. But the sequence of sending the messages such as TCS, MUXTBSND and OLC is not limited to that illustrated in Figure 12.

Response messages are omitted in Figure 12. The response messages for the TCS, MUXTBSND and OLC messages etc. are necessary according to H.245. After the user at the receiving side receives the above mentioned messages, returning a response message in a direction opposite to the original message path will be enough.

14. User 1 and user 3 enter a status of multimedia call. After the call finishes in the end, call release processing is performed.

To summarize, after the call connection is completed and a Traffic Channel is established in the embodiments of the invention, the MSC server participates in the media negotiation rather than completing the media negotiation in a manner of in-band terminal to terminal in the Traffic Channel by all parties of the communication, so that the MSC server learns of the establishment of Media Flow Logical Channels in the procedure of media negotiations among parties, and the MSC server may control the MGW to manage the media flows transmitted in the Media Flow Logical Channels, to insert some additional functions. This is compatible with the services commonly used in 2G networks. It also provides a feasible basic framework for additional functions such as charging according to media composition.

Furthermore, depending on the MSC server service logic, the MSC server may act as one party of the media negotiation, or act as agents for all parties of media negotiation, or act as a transparency-transferring network element for all parties of media negotiation.

When the MSC server acts as a transparently-transferring network element for all parties of media negotiation, the MSC server records media negotiation information transparently-transmitted during the transparently-transmission. In this case, the MSC server normally does not interfere with media negotiations among all parties, in order to increase negotiation efficiency and to save network resources. When it is required, the MSC server may control the MGW to complete media insertion operations according to recorded media negotiation information.

It is obvious that the skilled person in the art may perform various changes and modifications to the invention without deviating from the scope of the invention. For example, the embodiments of the invention may be extended in principle to networks outside WCDMA. The invention is in the scope of the appended claims.

## Claims

1. A method for implementing a multimedia call service, comprising:
A. establishing (S2, S3, S4), by a Mobile Switching Center, MSC, server, a Media Control Signaling Channel with each party participating in the multimedia call service through a Traffic Channel established during a call connection; and
B. by the MSC server, participating (S5) in a media negotiation through the Media Control Signaling Channel and completing (S5) the establishment of Media Flow Logical Channels in order to implement the multimedia call service;
**characterized in that** step A comprises:
A1. establishing (S2), by the MSC server, a first part of the Media Control Signaling Channel with a Media Gateway, MGW, through a Media Gateway Control Interface;
A2. instructing (S3), by the MSC server the MGW through the Media Gateway Control Interface to establish a second part of the Media Control Signaling Channel in the Traffic Channel between the MGW and each party respectively; and
A3. connecting (S4) the first part and the second part of the Media Control Signaling Channel, in order to establish the Media Control Signaling Channel between the MSC server and each party.

2. The method according to claim 1, **characterized in that** the MSC server is a party of the media negotiation, and step B comprises:
B11. performing, by the MSC server, the media negotiation with an opposite party through the Media Control Signaling Channel, and controlling the MGW to establish a Media Flow Logical Channel in the Traffic Channel with the opposite party; and
B12. transmitting and/or receiving, by the MSC server, media flows in the Media Flow Logical Channel.

3. The method according to claim 1, **characterized in that** the MSC server is an agent for each party of the media negotiation, and step B comprises:
B21. performing, by the MSC server, the media negotiation with each party through the Media Control Signaling Channel respectively, and controlling the MGW to establish Media Flow Logical Channels in the Traffic Channel with all parties respectively; and
B22. connecting all parts of the Media Flow Logical Channel in order to realize interaction of media flows of all parties.

4. The method according to claim 1, **characterized in that** the MSC server is an transparently-transferring network element of all parties of the media negotiation, and step B comprises:
B31. transparently-transferring, by all parties, media negotiation information through the MSC server to perform the media negotiation, and establishing Media Flow Logical Channels in the Traffic Channel, which is used to transparently-transfer media flows through MGW; and
recording, by the MSC server, the media negotiation information transparently-transferred;
B32. controlling, by the MSC server, the media flows transmitted in the Media Flow Logical Channels according to the recorded media negotiation information.

5. A system for implementing a multimedia call service, comprising all parties participating in the multimedia call service and
a Media Gateway, MGW, with ability to process multiplexed flows,
**characterized in that** the system further comprises:
a Media Switching Center, MSC, server, configured to establish a part of a Media Control Signaling Channel with the MGW through a Media Gateway Control Interface, instruct the MGW through the Media Gateway Control Interface to establish a second part of the Media Control Signaling Channel in a Traffic Channel established during a call connection between the MGW and each party participating in the multimedia call service respectively, connect the first part and the second part of the Media Control Signaling Channel to establish the Media Control Signaling Channel between the MSC server and each party, participate in a media negotiation through the Media Control Signaling Channel and complete the establishment of Media Flow Logical Channels in order to implement the multimedia call service.

6. The system according to claim 5, **characterized in that** the MSC server is further configured to perform the media negotiation with an opposite party through the Media Control Signaling Channel, and control the MGW to establish a Media Flow Logical Channel in the Traffic Channel with the opposite party, and transmit and/or receive media flows in the Media Flow Logical Channel.

7. The system according to claim 5, **characterized in that** the MSC server is further configured to perform the media negotiation with each party through the Media Control Signaling Channel respectively, and control the MGW to establish Media Flow Logical Channels in the Traffic Channel with all parties respectively, and connect all parts of the Media Flow Logical Channel in order to realize interaction of media flows of all parties.

8. The system according to claim 5, **characterized in that** the MSC server is further configured to transparently-transfer media negotiation information, record the media negotiation information transparently-transferred and control the media flows transmitted in the Media Flow Logical Channels according to the recorded media negotiation information.

9. The system according to any one of claims 5 to 8, **characterized in that** the MSC server interacts with the MGW through the Media Gateway Control Interface, in order to participate in the operations of codec negotiation, opening and closing of media flows.

10. The system according to claim 5, **characterized in that** the ability to process the multiplexed flows of the MGW comprises:
combining a plurality of separate media flows into one Traffic Channel for transmission;
splitting the multiplexed flows into separate media flows; and
through connecting the media flows.

## Patentansprüche

1. Verfahren zum Implementieren eines Multimedia-Anrufdienstes, das umfasst:
A. Herstellen (S2, S3, S4) durch einen Mobilvermittlungsstellen-Server, MSC-Server, eines Mediensteuerungs-Signalisierungskanals mit jedem Teilnehmer, der am Multimedia-Anrufdienst teilnimmt, durch einen während einer Anrufverbindung hergestellten Verkehrskanal; und
B. Teilnehmen (S5) an einer Medienverhandlung durch den Mediensteuerungs-Signalisierungskanal und Abschließen (S5) der Herstellung von logischen Medienstromkanälen, um den Multimedia-Anrufdienst zu implementieren, durch den MSC-Server;
**dadurch gekennzeichnet, dass** der Schritt A umfasst:
A1. Herstellen (S2) durch den MSC-Server eines ersten Teils des Mediensteuerungs-Signalisierungskanals mit einem Medien-Gateway, MGW, durch eine Medien-Gateway-Steuerschnittstelle;
A2. Anweisen (S3) durch den MSC-Server des MGW durch die Medien-Gateway-Steuerschnittstelle, einen zweiten Teil des Mediensteuerungs-Signalisierungskanals im Verkehrskanal zwischen dem MGW und jeweils jedem Teilnehmer herzustellen; und
A3. Verbinden (S4) des ersten Teils und des zweiten Teils des Mediensteuerungs-Signalisierungskanals, um den Mediensteuerungs-Signalisierungskanal zwischen dem MSC-Server und jedem Teilnehmer herzustellen.

2. Verfahren nach Anspruch 1, **dadurch gekennzeichnet, dass** der MSC-Server ein Teilnehmer der Medienverhandlung ist und der Schritt B umfasst:
B11. Ausführen der Medienverhandlung mit einem gegenüberliegenden Teilnehmer durch den Mediensteuerungs-Signalisierungskanal und Steuern des MGW, um einen logischen Medienstromkanal im Verkehrskanal mit dem gegenüberliegenden Teilnehmer herzustellen, durch den MSC-Server; und
B12. Senden und/oder Empfangen durch den MSC-Server von Medienströmen im logischen Medienstromkanal.

3. Verfahren nach Anspruch 1, **dadurch gekennzeichnet, dass** der MSC-Server ein Agent für jeden Teilnehmer der Medienverhandlung ist und der Schritt B umfasst:
B21. Ausführen der Medienverhandlung mit jeweils jedem Teilnehmer durch den Mediensteuerungs-Signalisierungskanal und Steuern des MGW, um logische Medienstromkanäle im Verkehrskanal jeweils mit allen Teilnehmern herzustellen, durch den MSC-Server; und
B22. Verbinden aller Teile des logischen Medienstromkanals, um eine Wechselwirkung der Medienströme aller Teilnehmer zu verwirklichen.

4. Verfahren nach Anspruch 1, **dadurch gekennzeichnet, dass** der MSC-Server ein transparent übertragendes Netzelement aller Teilnehmer der Medienverhandlung ist und der Schritt B umfasst:
B31. transparentes Übertragen durch alle Teilnehmer von Medienverhandlungsinformationen durch den MSC-Server, um die Medienverhandlung auszuführen, und Herstellen von logischen Medienstromkanälen im Verkehrskanal, der verwendet wird, um Medienströme transparent durch das MGW zu übertragen; und
Aufzeichnen durch den MSC-Server der transparent übertragenen Medienverhandlungsinformationen;
B32. Steuern durch den MSC-Server der in den logischen Medienstromkanälen übertragenen Medienströme in Übereinstimmung mit den aufgezeichneten Medienverhandlungsinformationen.

5. System zum Implementieren eines Multimedia-Anrufdienstes, das alle Teilnehmer, die am Multimedia-Anrufdienst teilnehmen, und
ein Medien-Gateway, MGW, mit der Fähigkeit, gemultiplexte Ströme zu verarbeiten, umfasst,
**dadurch gekennzeichnet, dass** das System ferner umfasst:
einen Medienvermittlungsstellen-Server, MSC-Server, der konfiguriert ist, einen Teil eines Mediensteuerungs-Signalisierungskanals mit dem MGW durch eine Medien-Gateway-Steuerschnittstelle herzustellen, das MGW durch die Medien-Gateway-Steuerschnittstelle anzuweisen, einen zweiten Teil des Mediensteuerungs-Signalisierungskanals in einem Verkehrskanal, der während einer Anrufverbindung zwischen dem MGW und jedem Teilnehmer, der am Multimedia-Anrufdienst teilnimmt, jeweils hergestellt wurde, herzustellen, den ersten Teil und den zweiten Teil des Mediensteuerungs-Signalisierungskanals zu verbinden, um den Mediensteuerungs-Signalisierungskanal zwischen dem MSC-Server und jedem Teilnehmer herzustellen, an einer Medienverhandlung durch den Mediensteuerungs-Signalisierungskanal teilzunehmen und die Herstellung von logischen Medienstromkanälen abzuschließen, um den Multimedia-Anrufdienst zu implementieren.

6. System nach Anspruch 5, **dadurch gekennzeichnet, dass** der MSC-Server ferner konfiguriert ist, die Medienverhandlung mit einem gegenüberliegenden Teilnehmer durch den Mediensteuerungs-Signalisierungskanal auszuführen und das MGW zu steuern, um einen logischen Medienstromkanal im Verkehrskanal mit dem gegenüberliegenden Teilnehmer herzustellen und Medienströme im logischen Medienstromkanal zu senden und/oder zu empfangen.

7. System nach Anspruch 5, **dadurch gekennzeichnet, dass** der MSC-Server ferner konfiguriert ist, die Medienverhandlung mit jedem Teilnehmer jeweils durch den Mediensteuerungs-Signalisierungskanal auszuführen und das MGW zu steuern, um logische Medienstromkanäle im Verkehrskanal jeweils mit allen Teilnehmern herzustellen, und alle Teile des logischen Medienstromkanals zu verbinden, um eine Wechselwirkung der Medienströme aller Teilnehmer zu verwirklichen.

8. System nach Anspruch 5, **dadurch gekennzeichnet, dass** der MSC-Server ferner konfiguriert ist, die Medienverhandlungsinformationen transparent zu übertragen, die transparent übertragenen Medienverhandlungsinformationen aufzuzeichnen und die in den logischen Medienstromkanälen übertragenen Medienströme in Übereinstimmung mit den aufgezeichneten Medienverhandlungsinformationen zu steuern.

9. System nach einem der Ansprüche 5 bis 8, **dadurch gekennzeichnet, dass** der MSC-Server durch die Medien-Gateway-Steuerschnittstelle mit dem MGW in Wechselwirkung tritt, um an den Operationen der Codec-Verhandlung, des Öffnens und des Schließens von Medienströmen teilzunehmen.

10. System nach Anspruch 5, **dadurch gekennzeichnet, dass** die Fähigkeit, die gemultiplexten Ströme des MGW zu verarbeiten, umfasst:
Kombinieren einer Vielzahl von separaten Medienströmen in einem Verkehrskanal für die Übertragung;
Aufspalten der gemultiplexten Ströme in separate Medienströme; und
Durchschalten der Medienströme.

## Revendications

1. Procédé pour mettre en oeuvre un service d'appel multimédia, comprenant:
A. établir (S2, S3, S4), au moyen d'un serveur de centre de commutation mobile, MSC, un canal de signalisation de commande de média avec chaque participant au service d'appel multimédia par l'intermédiaire d'un canal de trafic établi lors d'une mise en communication ; et
B. au moyen du serveur MSC, prendre part (S5) à une négociation de média par l'intermédiaire du canal de signalisation de commande de média et achever (S5) l'établissement de canaux logiques de flux de média afin de mettre en oeuvre le service d'appel multimédia ;
le procédé étant **caractérisé en ce que** l'étape A comprend:
A1. établir (S2), au moyen du serveur MSC, une première partie du canal de signalisation de commande de média avec une passerelle de média, MGW, par l'intermédiaire d'une interface de commande de passerelle de média ;
A2. donner l'instruction (S3), au moyen du serveur MSC, à la MGW, par l'intermédiaire de l'interface de commande de passerelle de média, d'établir une deuxième partie du canal de signalisation de commande de média dans le canal de trafic entre la MGW et respectivement chaque participant ; et
A3. mettre en communication (S4) la première partie et la deuxième partie du canal de signalisation de commande de média afin d'établir le canal de signalisation de commande de média entre le serveur MSC et chaque participant.

2. Procédé selon la revendication 1, **caractérisé en ce que** le serveur MSC est un participant à la négociation de média, et l'étape B comprend:
B11. mener, au moyen du serveur MSC, la négociation de média avec un participant opposé par l'intermédiaire du canal de signalisation de commande de média, et commander la MGW pour lui faire établir un canal logique de flux de média dans le canal de trafic avec le participant opposé ; et
B12. transmettre et/ou recevoir, au moyen du serveur MSC, des flux de média dans le canal logique de flux de média.

3. Procédé selon la revendication 1, **caractérisé en ce que** le serveur MSC est un agent pour chaque participant à la négociation de média, et l'étape B comprend:
B21. mener, au moyen du serveur MSC, la négociation de média respectivement avec chaque participant par l'intermédiaire du canal de signalisation de commande de média, et commander la MGW pour lui faire établir des canaux logiques de flux de média dans le canal de trafic respectivement avec tous les participants ; et
B22. mettre en communication toutes les parties du canal logique de flux de média afin de permettre une interaction entre les flux de média de tous les participants.

4. Procédé selon la revendication 1, **caractérisé en ce que** le serveur MSC est un élément de réseau à transfert transparent de tous les participants à la négociation de média, et l'étape B comprend:
B31. transférer de façon transparente, au moyen de tous les participants, des informations sur la négociation de média par l'intermédiaire du serveur MSC pour mener la négociation de média, et établir des canaux logiques de flux de média dans le canal de trafic pour transférer de façon transparente des flux de média par l'intermédiaire de la MGW ; et
enregistrer, au moyen du serveur MSC, les informations sur la négociation de média transférées de façon transparente ;
B32. commander, au moyen du serveur MSC, les flux de média transmis dans les canaux logiques de flux de média en fonction des informations sur la négociation de média enregistrées.

5. Système pour mettre en oeuvre un service d'appel multimédia, comprenant tous les participants au service d'appel multimédia, et
une passerelle de média, MGW, apte à traiter des flux multiplexés,
le système étant **caractérisé en ce qu'**il comprend en outre :
un serveur de centre de commutation mobile, MSC, conçu pour établir une partie d'un canal de signalisation de commande de média avec la MGW par l'intermédiaire d'une interface de commande de passerelle de média, donner l'instruction à la MGW, par l'intermédiaire de l'interface de commande de passerelle de média, d'établir une deuxième partie du canal de signalisation de commande de média dans un canal de trafic établi lors d'une mise en communication entre la MGW et respectivement chaque participant au service d'appel multimédia, mettre en communication la première partie et la deuxième partie du canal de signalisation de commande de média afin d'établir le canal de signalisation de commande de média entre le serveur MSC et chaque participant, prendre part à une négociation de média par l'intermédiaire du canal de signalisation de commande de média, et achever l'établissement de canaux logiques de flux de média afin de mettre en oeuvre le service d'appel multimédia.

6. Système selon la revendication 5, **caractérisé en ce que** le serveur MSC est en outre conçu pour mener la négociation de média avec un participant opposé par l'intermédiaire du canal de signalisation de commande de média, et commander la MGW pour lui faire établir un canal logique de flux de média dans le canal de trafic avec le participant opposé, et transmettre et/ou recevoir des flux de média dans le canal logique de flux de média.

7. Système selon la revendication 5, **caractérisé en ce que** le serveur MSC est en outre conçu pour mener la négociation de média respectivement avec chaque participant par l'intermédiaire du canal de signalisation de commande de média, et commander la MGW pour lui faire établir des canaux logiques de flux de média dans le canal de trafic respectivement avec tous les participants, et mettre en communication toutes les parties du canal logique de flux de média afin de permettre une interaction entre les flux de média de tous les participants.

8. Système selon la revendication 5, **caractérisé en ce que** le serveur MSC est en outre conçu pour transférer de façon transparente des informations sur la négociation de média, enregistrer les informations sur la négociation de média transférées de façon transparente, et commander les flux de média transmis dans les canaux logiques de flux de média en fonction des informations sur la négociation de média enregistrées.

9. Système selon l'une quelconque des revendications 5 à 8, **caractérisé en ce que** le serveur MSC entre en interaction avec la MGW par l'intermédiaire de l'interface de commande de passerelle de média afin de prendre part aux opérations de négociation de codec, d'ouverture et de fermeture de flux de média.

10. Système selon la revendication 5, **caractérisé en ce que** la MGW est apte à traiter les flux multiplexés en :
combinant une pluralité de flux de média distincts pour former un canal de trafic utilisé pour la transmission ;
décomposant les flux multiplexés en des flux de média distincts ; et
mettant en communication directe les flux de média.
